# EUROPEAN PATENT SPECIFICATION

(11) **EP 0 316 193 B1**
(45) Date of publication and mention of the grant of the patent: **16.08.1995**
(21) Application number: 88310655.1
(22) Date of filing: 11.11.1988
(51) Int. Cl.: B60N 2/44

(54) **Seat mechanism**
Sitzvorrichtung
Mécanisme de siège

(30) Priority: 11.11.1987 GB 8726394
(43) Date of publication of application: 17.05.1989
(73) Proprietor: Johnson Controls Automotive (UK) Ltd., Leigh-on-Sea Essex SS9 5JJ (GB)
(72) Inventor: Shotter, Brian Alfred, Sherbourne Dorset, DT9 43Y (GB)
(74) Representative: Holliday, Frank

(56) References cited:
- DE-A- 2 849 542
- GB-A- 1 091 994
- PATENT ABSTRACTS OF JAPAN vol. 5, no. 199 (M-102)(871) 17 December 1981,& JP-A-56 116947 (SUMITOMO JUKIKAI KOGYO) 14 September 1981,

## Description

The invention relates to adjustable seat mechanisms.

The invention relates to gear mechanisms which are widely used for motor vehicle seats. Such mechanisms have two main parts hinged together and respectively secured to the seat and to the seat back and include a tooth gear ring and co-operating toothed disc which are arranged to rollingly engage under the influence of a rotational eccentric cam. Such a mechanism is fully described for example in U.K. Patent Specification 1091994.

US-A-4 302 047 describes a vehicle seat mechanism corresponding to the preamble of claim 1 which utilises a concave toothed internal gear pressed from a first support plate, and a cooperating convex toothed external or pinion gear part pressed from a second support plate.

At present a pinion and internal gear are fine blanked from plate steel to form a high ratio gear. Due to the high torque strength required of the gear system, both gears are case hardened. Case hardening increases the cost of the mechanism as it is an extra process and it leads to a number of performance problems within the gear's design. The gears tend to lose their concentricity and the bearing centres drift when they are heat treated because the gear forms are pressed into non-symmetrical shapes in the plate steel. Gear distortion and the accommodation of it leads to adverse backlash and effort performance. Heat treatment also causes problems where the pressed gear plates need to be welded to other seat components like the squab. Welding heat treated metals causes gassy welds which tend to break apart.

Such a gear system is desirable because of its simplicity and limited number of parts. To go to softer materials would normally require a planetary gear system to spread the gear load, however this would involve more parts. Due to the fine blanking of the pinion and internal gear, two problems arise. So as to allow the plates to operate flush with each other, thus preventing transverse movement, the internal gear pressing is deeper than the protrusion of the pinion gear pressing; this leads to redundant tooth face. The pinion also has rounding of its tooth tip due to the limitations of fine flow fine blanking which means that the tooth flank contact area is less than that apparent, this increases contact stress and also leads to plate separation in failure, as the collapsing tooth tips (where contact stress is greatest) push the gears apart in a transverse fashion.

It is an object of the invention to overcome or at least reduce these disadvantages.

According to the invention there is provided an adjustable seat gear mechanism comprising: two support plates for securing to the seat and seat back, a first of said support plates having a concave toothed gear ring formed therein, a convex toothed gear disc being provided on the second support plate; and a rotational eccentric cam arranged in use to rollingly engage the teeth of the gear disc with the teeth of the gear ring to move the support plates relative to one another, the teeth of the gear ring and gear disc being of generally semi-circular form, characterised in that the toothed gear disc is formed separately from the second support plate and connected thereto by means transmitting torque from the toothed gear disc to the second support plate.

The concave teeth have a somewhat greater radius of curvature than the convex teeth, and the gear disc rolls within the ring gear.

Preferably, only one of the gears is case-hardened or formed of hardened material.

Preferably, the curves of the flanks of the concave teeth are semi-circular and struck from different centres separated a short distance in a direction along an arc about the centre of the concave teeth at either side of a central radial line of the respective gear to narrow somewhat the mouth of the cups formed by each tooth. The flanks of each tooth of the pinion may additionally or alternatively be struck from different centres which are separated by a short distance in a similar manner to widen the form of the teeth to some extent.

The cushion plate may be formed with a central aperture arranged to provide a bearing for the axle at the other side of the gears.

The vehicle seat recliner mechanisms according to the invention will now be described by way of example with reference to the accompanying drawings, in which :-
Fig. 1 is an exploded isometric view of one mechanism;
Fig. 2 is an illustrative view of gears for the mechanism;
Fig. 2A and Fig. 2B are detail views of part of gears for the mechanism;
Fig. 3 is more representative view of the gears;
Fig. 4 is a cross-sectional elevation of an assembled mechanism; and
Fig. 5 shows an exploded view of an alternate mechanism.

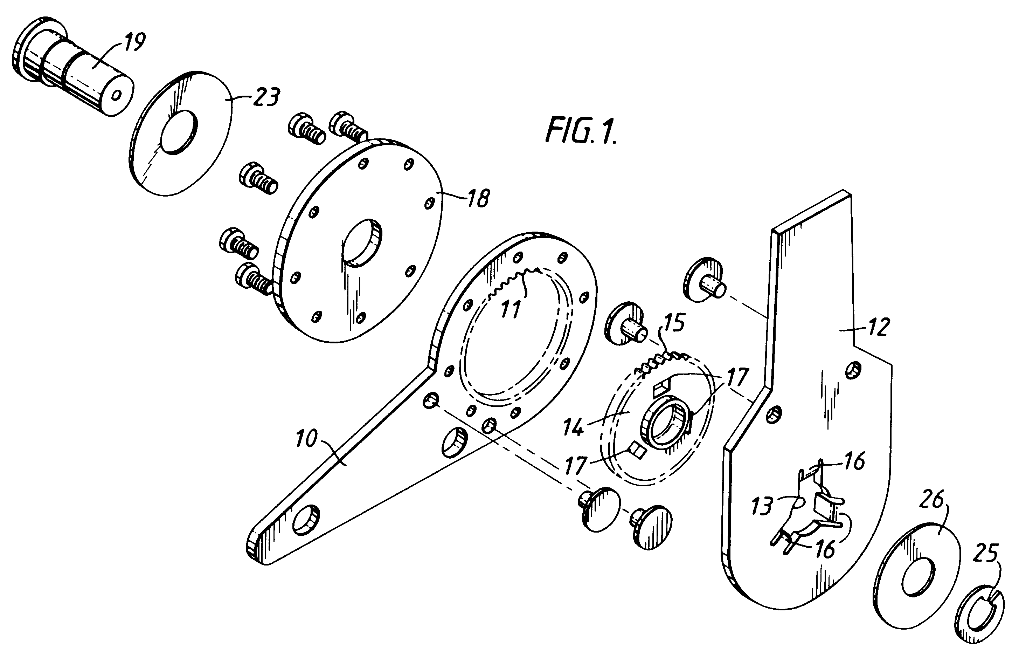

Referring to the drawings, in Fig. 1 the mechanism comprises a steel cushion plate 10 which is fine blanked with a concave conformal gear 11. A steel squab plate 12 has a central hole 13 to provide a bearing for a part of a sintered hard steel pinion 14 which provides a convex conformal gear 15 on its periphery. The squab plate 12 has fingers or stakes 16 which for assembly are bent over to engage in apertures 17 in the pinion to hold the pinion 14 to rotate with the squab plate 12. A separate cushion plate bearing is carried by a bush 18 which bolts to the side of the cushion plate 10. A central axle 19 passes through the bush 18, the cushion plate 10, the pinion 14 and the squab plate 12 and provides an eccentric cam which in use moves the gears 11 and 15 in a rolling fashion in generally conventional manner for the Cardan gears.

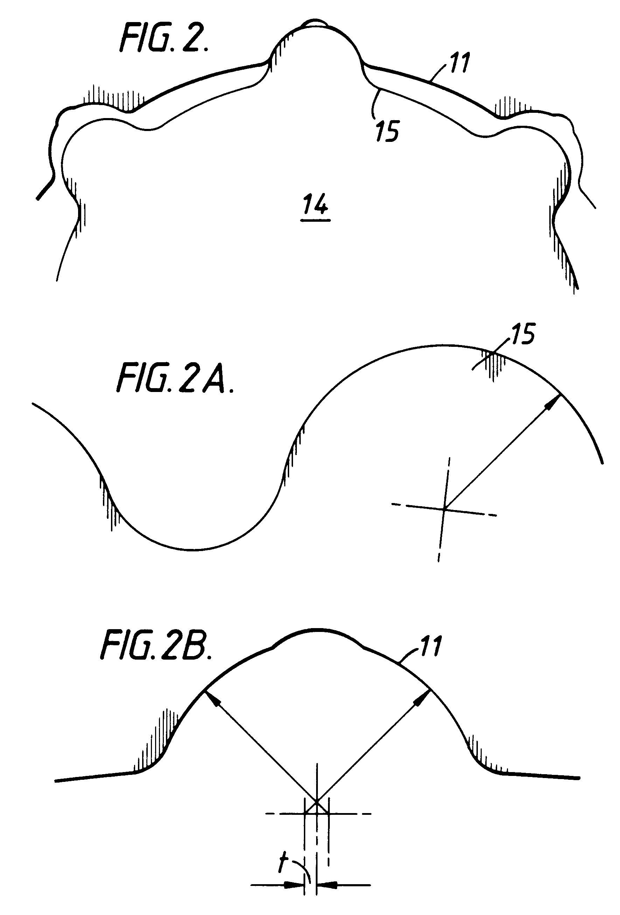

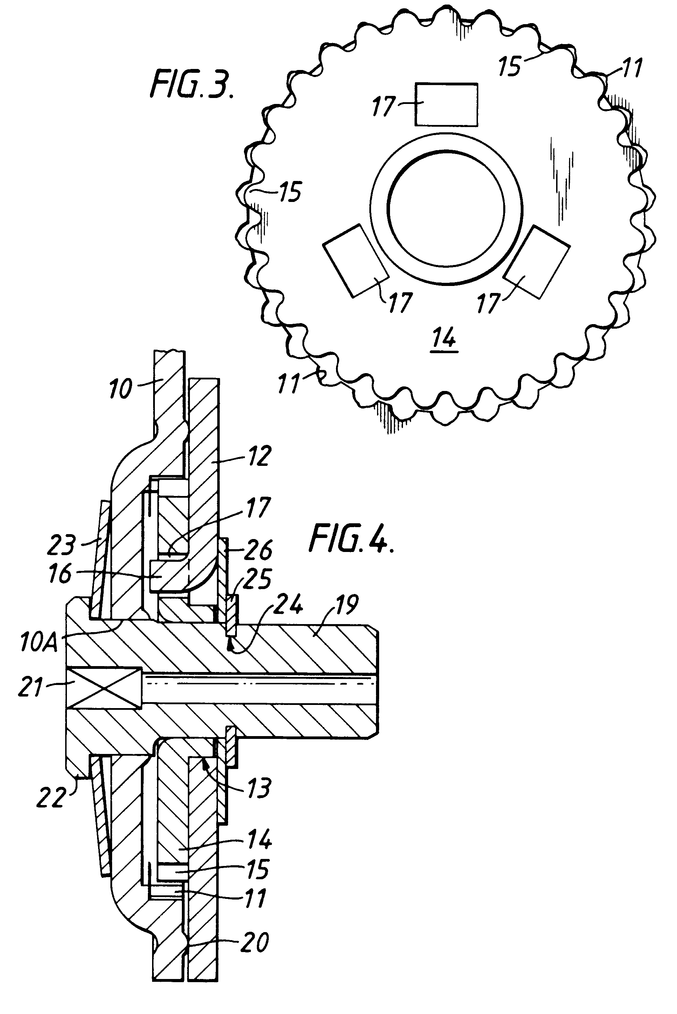

In Fig. 2, the conformal gear forms shown exaggerately illustrate the conformal gear arrangement. Fig. 3 shows the overall form of the gears. Conformal gears allows the tooth contact ratio to be significantly higher than otherwise. In previous gear systems in the prior art in order to prevent conjugate action due to the high gear ratio involved, the contact pressure angle needed to accomodate this leads to a tooth contact ratio of 0.2 on a time average basis whereas in normal gears, a ratio of 1.7 could be expected. Although 0.2 is meaningless in terms of strength, due to the take up by adjacent teeth in an elastic distortion, this weakness tends to still lead to greater wear and increased backlash in the gear system. The chosen conformal gears reduces contact stress in the teeth by a quarter and halves the Hertzian stress. Full tooth flanks of the gear are utilized which has several advantages. Only one of the two gears needs to be case hardened. The described conformal gears also allow the tooth contact ratio to be raised towards the 1.7 ratio due to the fact in the matching pair of gears the pitch circle diameter occurs at the tooth tip diameter of one gear and at the tooth root diameter of the other gear. Thus, no trimming is likely to occur during any wobble conjugate action of the pinion 14.

In Fig. 4, the cushion plate 10 has a localised contact ring seal area 20 which can form a grip when the blanked teeth of the gear 11 are formed. The cushion plate 10 in Figure 4 is not provided with a separate bush 18 as in Fig. 1 but extends to provide central bearing surfaces formed integrally which bear against the axle 19 at 10A. The central shaft 19 is formed with a square bore 21 to receive the shaft of a hand wheel (not shown) for use in operating the gear mechanism. A collar 22 at one end of the shaft 19 grips the centre of a Belville spring washer 23 and has an intermediate slot 24 to receive a circlip 25 which holds a grease seal washer 26 in position. It can be seen how the bent-over stakes 16 pass through the apertures 17 in the pinion 14. The squab plate 12 also provides a bearing surface at 13 for the central part of the pinion 14.

The described mechanism operates in the manner of the previous gear mechanisms in that rotation of the axle 19 causes the gears 11 and 15 to roll around one another in the usual way. The described design however provides certain important advantages over currently used gear mechanisms which advantages are discussed further below.

It is noted that the chosen conformal gear forms as described are used. The convex tooth form of the gear 15 is preferably at least virtually of semi-circular form. The way which the gears operate in practice is for the pinion 14 to effectively pivot around the tooth centre of curvature until the next semi-circular tooth engages in the next cup and the pivoting action moves to the centre of that tooth. The pinion geometry is thus simple, the teeth are symmetrical. The preferred geometry of the gear 11 is however more complicated. The flank curves are struck from different centres and both flanks have a somewhat larger radius of curvature than the pinion teeth. This difference allows a tolerance to position errors in the gear mountings without causing the load to be carried on a tooth edge as occurs in involute gears. The radius difference is related to loaded contact area. At light loads the contact band will be narrow but near the centre of the tooth height and as the load increases the band widens to occupy more of the tooth height.

Exemplary dimensions of the gears are as follows:-
The pinion 15 has twenty-nine teeth and an outside diameter of approximately 53mm, the root diameter is approximately 49mm. Each tooth is formed with a radius, centred on the root diameter, see Fig 2A. The gear 11 has an inside diameter of approximately 52mm and a root diameter of approximately 55mm. The radius of flank curves are centred on opposite sides of the root centre respectively by dimension "t" (see Fig 2B).

It was mentioned in the introduction that conventionally both gears are hardened leading to certain disadvantages. In the described mechanism only the pinion gear is hardened. Because it is symmetrical, distortion during hardening is expected to be minimal. In any event, the geometry of the pinion gear will be then preserved in use and in practice the pinion gear tends to wear the gear 11 to a conforming shape. This is likely to lead to a work hardening of the softer material of the gear 11 and lead to improvements in its load bearing capacity.

It will be noted, as described in Fig. 4, that the axle 19 is used to hold the gear mechanism together. Thus axial restraint is symmetrical about each support bearing. The Belville washer 23 provides a degree of axial preload and zero axial float to keep the gears 11 and 14 fully engaged with one another.

The basic mechanism in Fig. 4 only has two assembly operations, the attachment of the pinion 14 to the squab plate 12 and the assembly of the other parts on the axle 19. The Belville washer 23 provides a degree of damping between the gears to minimise any backlash between the gears. The Belville washer 23 also reduces the need for particularly tight axial tolerances.

The described pinion is a fine blanked part. However, the pinion 14 may be made from a turned blank using any conventional teeth forming techniques and widen the choice of possible materials that can be used. The cushion plate 10 is a fine blanked component but as it is unhardened it can be welded easily to a seat back frame or other support.

In Fig. 4 the axle 19 is shown with a square bore 21 at one end. If a square bore is provided at both ends of the axle it enables the same identical gear mechanism to be used whichever side of the mechanism the handwheel is required.

The axle 19 can tilt to some extent in a cantilever fashion to prevent gear tooth clashing.

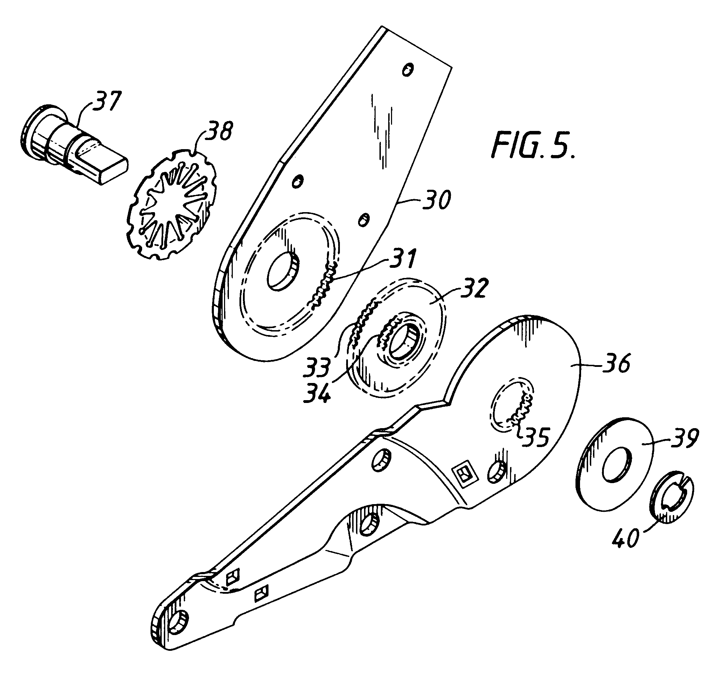

In Fig 5, a similar gear mechanism is shown in which a squab plate 30 is provided with a concave conformal gear 31 and a pinion 32 carries a convex conformal gear 33. The pinion also has a toothed spline 34 which is an interference fit to a toothed aperture 35 in a cushion plate 36. A central axle 37, which carries an eccentric fits through the squab plate 30, the pinion 32 and cushion plate 35 and is provided a spring washer 38, a washer 39 and a circlip 40.

The mechanism operates generally as described above in that rotation of the axle 37 causes rolling engagement of the gears 31 and 33 to move the squab plate and cushion plate relative to one another. The shape and configuration of the gears of Fig 5 is as described with reference to Fig 2 and 3 above.

## Claims

1. An adjustable seat gear mechanism comprising:
two support plates (10, 12) for securing to the seat and seat back, a first of said support plates (10) having a concave toothed gear ring (11) formed therein, a convex toothed gear disc (14) being provided on the second support plate (12); and a rotational eccentric cam (19) arranged in use to rollingly engage the teeth of the gear disc (14) with the teeth of the gear ring (11) to move the support plates (10, 12) relative to one another, the teeth of the gear ring and gear disc being of generally semi-circular form,
characterised in that the toothed gear disc (14) is formed separately from the second support plate (12) and connected thereto by means (16, 17) transmitting torque from the toothed gear disc (14) to the second support plate (12).

2. An adjustable seat mechanism according to claim 1, characterised in that the first support plate (10) is a cushion plate and the concave toothed gear ring is formed thereby.

3. An adjustable seat mechanism according to claim 1, in which the first support plate (10) is a squab plate and the concave toothed gear ring is formed thereby.

4. An adjustable seat mechanism according to claim 1, 2 or 3, characterised in that the concave teeth have a somewhat greater radius of curvature than the convex teeth.

5. An adjustable seat mechanism according to any one of claims 1 to 4, characterised in that the toothed gear (14) disc is case hardened at least in the tooth region.

6. An adjustable seat mechanism according to any one of claims 1 to 5, in which the first support plate has an aperture formed therein to provide a central bearing for the cam (19).

## Patentansprüche

1. Verstellbare Sitzvorrichtung, die folgende Elemente aufweist:
zwei Stützplatten (10, 12) zur Befestigung am Sitz und an der Sitzlehne, wobei die erste der Stützplatten (10) einen in dieser gebildeten, konkav geformten Zahnradkranz (11) hat, während auf der zweiten Stützplatte (12) eine konvex geformte Zahnradscheibe (14) gebildet wird, und einen exzentrischen Drehnocken (19), der so angeordnet ist, daß er bei der Nutzung das rollende Eingreifen der Zähne der Zahnradscheibe (14) in die Zähne des Zahnradkranzes (11) bewirkt, um die Stützplatten (10, 12) im Verhältnis zueinander zu bewegen, wobei die Zähne des Zahnradkranzes und der Zahnradscheibe eine allgemein halbkreisförmige Form haben,
dadurch gekennzeichnet, daß die Zahnradscheibe (14) getrennt von der zweiten Stützplatte (12) ausgeführt und mit dieser durch Mittel (16, 17) verbunden wird, die das Drehmoment von der Zahnradscheibe (14) auf die zweite Stützplatte (12) übertragen.

2. Verstellbare Sitzvorrichtung nach Anspruch 1, dadurch gekennzeichnet, daß die erste Stützplatte (10) eine Polsterplatte ist und der konkav geformte Zahnradkranz durch diese gebildet wird.

3. Verstellbare Sitzvorrichtung nach Anspruch 1, bei der die erste Stützplatte (10) eine Sitzplatte ist und der konkav geformte Zahnradkranz durch diese gebildet wird.

4. Verstellbare Sitzvorrichtung nach Anspruch 1, 2 oder 3, dadurch gekennzeichnet, daß die konkaven Zähne einen etwa größeren Krümmungsradius als die konvexen Zähne haben.

5. Verstellbare Sitzvorrichtung nach einem der Ansprüche 1 bis 4, dadurch gekennzeichnet, daß die Zahnradscheibe (14) zumindest im Zahnbereich einsatzgehärtet ist.

6. Verstellbare Sitzvorrichtung nach einem der Ansprüche 1 bis 5, bei der in der ersten Stützplatte eine Öffnung gebildet wird, um eine Mittelbohrung für den Nocken (19) zu schaffen.

## Revendications

1. Mécanisme d'engrenage de siège réglable, comprenant:
deux plaques de support (10, 12) destinées à être fixées au siège et au dossier du siège, une première des dites plaques de support (10) possédant un anneau d'engrenage denté concave qui y est formé (11), un disque d'engrenage denté convexe (14) étant agencé sur la deuxième plaque de support (12); et une came d'excentrique à rotation (19) agencée en service de sorte à s'engager par roulement dans les dents du disque d'engrenage (14) avec les dents de l'anneau d'engrenage (11) pour déplacer les plaques de support (10, 12) l'une par rapport à l'autre, les dents de l'anneau d'engrenage et du disque d'engrenage ayant une forme généralement semi-circulaire,
caractérisé en ce que le disque d'engrenage denté (14) est formé séparément de la deuxième plaque de support (12) et y est connecté par un moyen (16, 17) transmettant le couple du disque d'engrenage denté (14) à la deuxième plaque de support (12).

2. Mécanisme de siège réglable selon la revendication 1, caractérisé en ce que la première plaque de support (10) est une plaque de coussin, l'anneau d'engrenage denté concave étant formé par celle-ci.

3. Mécanisme de siège réglable selon la revendication 1, dans lequel la première plaque de support (10) est une plaque de coussin de dossier, l'anneau d'engrenage denté concave étant formé par celle-ci.

4. Mécanisme de siège réglable selon les revendications 1, 2 ou 3, caractérisé en ce que les dents concaves ont un rayon de courbure légèrement plus grand que les dents convexes.

5. Mécanisme de siège réglable selon l'une quelconque des revendications 1 à 4, caractérisé en ce que le disque d'engrenage denté (14) est cémenté par trempe, au moins dans la région des dents.

6. Mécanisme de siège réglable selon l'une quelconque des revendications 1 à 5, dans lequel la première plaque de support comporte une ouverture qui y est formée pour fournir un support central pour la came (19).
